# EUROPÄISCHE PATENTANMELDUNG

(11) **EP 1 717 198 A2**
(43) Veröffentlichungstag der Anmeldung: **02.11.2006**
(21) Anmeldenummer: 06007151.1
(22) Anmeldetag: 04.04.2006
(51) Int. Cl.: C01B 3/38, B01J 8/02

(54) **Verfahren und Vorrichtung zur Hochtemperaturreformierung**

(30) Priorität: 29.04.2005 DE 102005020122; 10.06.2005 DE 102005026881
(71) Anmelder: Linde Aktiengesellschaft, 65189 Wiesbaden (DE)
(72) Erfinder: Tautz, Hanno, 81477 München (DE)

(57) **Zusammenfassung**

Die Erfindung betrifft ein Verfahren zur Herstellung eines Synthesegasproduktes durch katalytische Dampfreformierung eines vorwiegend aus Wasserstoff (H₂) und Kohlenmonoxid (CO) bestehenden, Kohlenwasserstoffe enthaltenden Einsatzes (C-Einsatz) sowie eine Vorrichtung zur Durchführung des Verfahrens. Der C-Einsatz (6) wird mit Wasserdampf und /oder Reformergas (8) gemischt und in einem Reaktor (10) durch Dampfreformierung in das Synthesegasprodukt (13) umgewandelt.

## Beschreibung

Die Erfindung betrifft ein Verfahren zur Herstellung eines Synthesegasproduktes durch katalytische Dampfreformierung eines vorwiegend aus Wasserstoff (H₂) und Kohlenmonoxid (CO) bestehenden, Kohlenwasserstoffe enthaltenden Einsatzes (C-Einsatz) sowie eine Vorrichtung zur Durchführung des Verfahrens.

Die Produktion von Synthesegas ist ein wichtiger Schritt bei der Herstellung einer Vielzahl von Stoffen wie Ammoniak oder Methanol, aber auch bei der Erzeugung von synthetischen Kraftstoffen aus Erdgas (GTL). Das bevorzugte Verfahren, mit dem das Synthesegas produziert wird, hängt vom Zielprodukt und der Anlagenkapazität ab. Die Produktion von Wasserstoff basiert meist auf dem Prinzip der Dampfreformierung im von außen beheizten Rohrreformer. Für die Produktion von Synthesegas für die Methanolherstellung in Großanlagen hat sich der katalytische Autothermreformer (ATR) durchgesetzt. Für die Produktion von Synthesegas in GTL -Anlagen, die nach dem Fischer-Tropsch-Verfahren arbeiten, werden sowohl Autothermreformer als auch eine Kombination von partieller Oxidation ohne Katalysator (POX) und Dampfreformierung im Rohrreformer eingesetzt. Die heißen Abgase von POX oder ATR-Reaktoren können zur konvektiven Beheizung von Dampfreformerrohren (Gas-Heated-Reformer (GHR)) verwendet werden. Das GHR-Produktgas wird meist im ATR bzw. POX-Reaktor nachbehandelt. Darüber hinaus gibt es noch Kombinationen der verschiedenen Anlagentypen.

Bei der Dampfreformierung im Rohrreformer wird ein vorgewärmter kohlenwasserstoffhaltiger Einsatz mit Wasserdampf gemischt und durch mit Katalysatormaterial gefüllte Reformerrohre geleitet. Der Katalysator beschleunigt die Dampfreformierung der Kohlenwasserstoffe und unterstützt gleichzeitig die sog. Wasser-Gas-Shiftreaktion. Handelt es sich beispielsweise bei dem kohlenwasserstoffhaltigen Einsatz um Methan, läuft die endotherme Reformierungsreaktion nach der Gleichung

CH₄ + H₂O ⇔ CO + 3H₂

und die exotherme Wasser-Gas-Shiftreaktion nach der Gleichung

CO + H₂O ⇔ CO₂ + H₂

ab. Da die Reformierungsreaktion mehr Energie verbraucht, als die Wasser-Gas-Shiftreaktion liefert, müssen die Reformerrohre von außen mit Brennern oder heißen Prozessgasen beheizt werden, um eine ausreichende Reaktionstemperatur aufrecht zu erhalten. Durch die Festigkeitseigenschaften des Rohrmaterials (nickelhaltige Edelstähle) bedingt, werden die Reaktionstemperaturen auf 800-900°C und die Reaktionsdrucke auf 20-40bar im Rohrreformer beschränkt. Bei diesen Betriebsparametem erfolgt die Umsetzung der Kohlenwasserstoffe im Einsatz nur unvollständig. Um einen möglichst hohen Umsetzungsgrad zu erreichen und gleichzeitig die Rußbildung in den Reformerrohren zu minimieren, wird mit einem Dampfüberschuss gearbeitet, sodass das Verhältnis von Wasserdampf zu Kohlenstoff (D/C-Verhältnis) je nach Temperatur und gewünschter Synthesegaszusammensetzung zwischen 2 und 4 liegt.

In POX-Anlagen wird Synthesegas dadurch erzeugt, dass ein vorgewärmter kohlenwasserstoffhaltiger Brennstoffeinsatz bei Temperaturen zwischen 1300 und 1500°C und Drücken bis zu 150bar mit einem Oxidationsmittel umgesetzt wird. Die hohen Reaktordrücke und Betriebstemperaturen werden dadurch ermöglicht, dass der Reaktionsraum mit einer Wärmeisolierung gegen einen außen liegenden druckfesten Stahlmantel gekapselt ist. Da nur geringe Mengen Wasserdampf (Spüldampf) mit den Einsatzstoffen zugegeben werden, ist das D/C-Verhältnis i.Allg. kleiner als 0,1. Die für die Reformierung erforderliche Wärme muss durch Oxidationsreaktionen intern erzeugt werden. Für die Oxidation wird Sauerstoff in einer Menge zugegeben, die für eine vollständige Umsetzung der Kohlenwasserstoffe i.Allg. nicht ausreichend ist. Die Reformierungsreaktion läuft in der Gasphase ohne Katalysator ab. Wird Methan als Brennstoffeinsatz verwendet, erfolgt die exotherme Umsetzung in einer POX-Anlage z. B. nach den folgenden Gleichungen:

CH₄ + 2 O₂ ⇒ CO₂ + 2 H₂O

2CH₄ + O₂ ⇒ 2CO + 4H₂

ATR-Reaktoren werden mit einem vorgewärmten kohlenwasserstoffhaltigen Einsatz, einem ebenfalls vorgewärmten Oxidationsmittel und Wasserdampf beschickt. Das typische D/C-Verhältnis liegt bei 0,6. Charakteristisch für die katalytische Autothermreformierung ist die hohe Flexibilität des Prozesses, die eine Wahl der Reaktionsparameter (kohlenwasserstoffhaltiger Einsatz, D/C-Verhältnis, Temperatur, Druck) in einem weiten Bereich ermöglicht. Typischerweise liegt die Arbeitstemperatur eines ATR-Reaktors zwischen 900 und 1500°C und der Arbeitsdruck zwischen 20 und 40 bar. Als kohlenwasserstoffhaltige Einsätze sind Erdgas, LPG und Naphta geeignet. Darüber hinaus werden ATR-Reaktoren häufig mit Gasen beschickt, die bereits einen Dampfreformer passiert haben. In diesen Fällen fungiert der ATR-Reaktor als sog. Sekundärreformer. Die maximale Arbeitstemperatur wird durch die Temperaturstabilität des Katalysators und/oder der feuerfesten Auskleidung des Reaktors begrenzt.

Aus verfahrenstechnischer Sicht handelt es sich bei der ATR um eine Kombination aus POX mit erhöhter Dampfzufuhr und Dampfreformierung im Katalysatorbett. Die Energie für die Aufrechterhaltung der endothermen Reformierungsreaktion wird durch die partielle Oxidation von zumindest einem Teil des kohlenwasserstoffhaltigen Einsatzes erzeugt. Um die Wärmeverluste des Reformers decken zu können, wird die Menge an Oxidationsmittel so eingestellt, dass der Gesamtprozess (Aufheizung von kohlenwasserstoffhaltigem Einsatz und Oxidationsmittel, Oxidation, Reformierung und Wasser-Gas-Shiftreaktion) leicht exotherm ist. Ist Stickstoff im Synthesegasprodukt erlaubt bzw. erwünscht, wie es der Fall ist, wenn das Synthesegas als Ausgangsstoff für die Ammoniakproduktion dient, wird als Oxidationsmittel Luft oder mit Sauerstoff angereicherte Luft eingesetzt. Wenn dagegen kein Stickstoff im Synthesegasprodukt vorhanden sein darf, wird Sauerstoff verwendet.

Es gibt zwei hauptsächliche ATR-Versionen, welche sich im Reaktordesign und in der Anordnung des Katalysatorbetts unterscheiden. Bei der ersten Version werden der kohlenwasserstoffhaltige Einsatz, Wasserdampf und das Oxidationsmittel durch einen zentral angeordneten Mischer geführt, von wo aus sie direkt in ein Katalysatorbett strömen. Bei der zweiten Version ist der Mischer als nach unten feuemder Brenner ausgeführt, der oberhalb des Katalysatorbettes angeordnet ist. Die zweite Version wird weit häufiger eingesetzt als die erste, da sie sich in der Praxis als vielseitiger erwiesen hat. Verglichen mit der Dampfreformierung kann im ATR mit einem weit geringeren D/C-Verhältnis von etwa 0,3-0,6 gearbeitet werden, womit ein Wasserstoff/Kohlenmonoxid-Verhältnis (H₂/CO-Verhältnis) im Synthesegasprodukt von 2,15 erreicht werden kann. Ein solches Synthesegas eignet sich sehr gut für die Weiterverarbeitung in einer nachgeschalteten Anlage zur Erzeugung von synthetischen Kraftstoffen, da das H₂/CO-Verhältnis dem dort geforderten Idealwert sehr nahe kommt.

In der Version mit offener Flamme besteht ein ATR-Reaktor aus einem mit einer feuerfesten Isolierung ausgekleideten Reaktorbehälter, der in seinem weitgehend zylindrisch geformten unteren Bereich ein Bett aus einem geeigneten Katalysatormaterial enthält. Oberhalb des Katalysatorbetts befindet sich eine nach oben konisch sich verjüngende Brennkammer, an deren höchstem Punkt ein Brenner angeordnet ist.

Um eine möglicht effektive Umsetzung der Kohlenwasserstoffe und eine möglichst geringe Belastung des Katalysatormaterials zu erreichen, werden Strömungsverhältnisse in der Brennkammer angestrebt, durch die der Gasstrom an jeder Stelle mit gleicher Stromdichte und Temperatur in das Katalysatorbett eintritt. In der Praxis ist ein solcher Idealzustand nur angenähert zu verwirklichen, weshalb der zentrale Bereich des Katalysatorbetts, der der Brennerflamme am nächsten ist, einer größeren thermischen Belastung ausgesetzt ist, als die weiter entfernten Randbereiche. In der Anfahrphase wird ein Autothermreformer häufig bei einem kleineren Druck als dem Betriebsdruck betrieben. Da unter diesen Bedingungen die Brennerflamme lang ist, ist die thermische Belastung des Katalysatorbettes in dieser Phase besonders hoch.

Im Katalysatorbett werden nur relativ geringe Gasgeschwindigkeiten von 1-1,5m/s empfohlen, sodass eine Erhöhung der Kapazität eines Autothermreformers nur in geringem Maß durch eine bloße Steigerung des Einsatzvolumenstromes möglich ist. Vielmehr ist es notwendig, die Anströmfläche des Katalysatorbettes - und damit auch den Durchmesser der Brennkammer- in erster Näherung linear mit ansteigender Kapazität zu vergrößern. Nach dem aktuellen Stand der Technik ist die Kapazität eines Autothermreformers auf ca. 600000m_{N}³/h Synthesegas beschränkt.

Treten Probleme mit dem Katalysatorbett auf (z. B. eine zu hohe Beladung mit Ruß) oder muss der Katalysator aufgrund seiner Alterung ausgetauscht werden, ist es notwendig, einen ATR-Reaktor abzuschalten und abzukühlen. Die Synthesegasproduktion muss unterbrochen werden, und kann erst dann wieder fortgesetzt werden, wenn die Probleme beseitigt und der ATR-Reaktor wieder angefahren ist.

Untersuchungen zur Rußbildung und Reaktionskinetik in der Gasphase und am Katalysator haben gezeigt, dass der Volumenbedarf für partielle Oxidation und Dampfreformierung sehr unterschiedlich ist, da die partielle Oxidation um einige Größenordnungen schneller abläuft, als die Reformierungsreaktion. Es ist daher nicht möglich, den Reaktionsraum gemäß dem konventionellen ATR-Reaktor Design so zu gestalten, dass gleichzeitig für beide Reaktionen optimale Bedingungen herrschen.

Der Erfindung liegt die Aufgabe zugrunde, ein Verfahren der eingangs genannten Art sowie eine Vorrichtung zur Durchführung des Verfahrens anzugeben, mit dem es möglich ist, ein Synthesegasprodukt herzustellen, das aber nicht die oben beschriebenen Nachteile des Standes der Technik aufweist.

Diese Aufgabe wird verfahrensseitig erfindungsgemäß dadurch gelöst, dass aus dem C-Einsatz durch Zuspeisung eines überhitzten Wasserdampf enthaltenden Einsatzes (Wasserdampfeinsatz) ein weitgehend homogenes Gasgemisch gebildet wird, welches anschließend durch katalytisch unterstützte Dampfreformierung in das Synthesegasprodukt umgesetzt wird, wobei die für die katalytisch unterstützte Dampfreformierung benötigte Energie vollständig dem weitgehend homogenen Gasgemisch entzogen wird.

Erfindungsgemäß handelt es sich bei dem Wasserdampfeinsatz um überhitzten Wasserdampf oder um ein Gemisch aus überhitztem Wasserdampf und H₂ oder/und CO oder/und CO₂ oder/und Kohlenwasserstoffen, welches bevorzugt durch Gas-Heated- oder Dampf-Reformierung eines Kohlenwasserstoffe enthaltenden Stoffstroms gewonnen wird.

Der C-Einsatz ist nahezu rußfrei und weist vor der Zuspeisung des Wasserdampfeinsatzes eine Temperatur auf, die zwischen 800 und 2500°C, bevorzugt zwischen 950 und 2000°C und besonders bevorzugt zwischen 1050 und 1600°C liegt; sein Druck liegt zwischen 1 und 150 bar. Der Wasserdampfeinsatz wird dem C-Einsatz mit Temperaturen zugespeist, die zwischen 300 und 1100°C liegen.

Im Rahmen des erfindungsgemäßen Verfahrens wird bevorzugt ein C-Einsatz verwendet, der durch partielle Oxidation (POX) eines kohlenwasserstoffhaltigen Brennstoffeinsatzes, bei dem es sich vorzugsweise um Methan handelt, erzeugt wird. Bei der Verwendung von Methan als Brennstoffeinsatz wird die Bildung von Ruß - der sich auf dem Katalysatormaterial des Dampfreformers ablagern und dessen Funktion beeinträchtigen kann - am sichersten vermieden. Mit zunehmendem Anteil höherer Kohlenwasserstoffe im Brennstoffeinsatz erhöht sich der O₂- und/oder Dampfbedarf zur Unterdrückung der Rußbildung. Als Oxidationsmittel wird Luft oder mit Sauerstoff angereicherte Luft oder reiner Sauerstoff verwendet. Sowohl der Brennstoffeinsatz als auch das Oxidationsmittel werden zweckmäßigerweise vorgewärmt, bevor sie zur Reaktion gebracht werden. Bevorzugt wird der Brennstoffeinsatz auf Temperaturen zwischen 150 und 650°C und das Oxidationsmittel auf Temperaturen zwischen 50 und 600°C vorgewärmt. Das Brennstoffeinsatz/Oxidationsmittel-Verhältnis wird so gewählt, dass die Temperaturen des erzeugten C-Einsatzes zwischen 800 und 2500°C, bevorzugt zwischen 950 und 2000°C und besonders bevorzugt zwischen 1050 und 1600°C liegen. Die partielle Oxidation wird bei Drücken zwischen 1 und 150 bar durchgeführt.

Der Wasserdampfeinsatz wird mit dem C-Einsatz so gemischt, dass ein Gasgemisch entsteht, das sowohl bezüglich der Temperaturverteilung als auch der chemischen Zusammensetzung weitgehend homogen ist. Dieses weitgehend homogene Gasgemisch wird in die Reaktionskammer eines Dampfreformers geführt und dort in Kontakt mit einem geeigneten Katalysatormaterial gebracht, wobei es durch Dampfreformierung und Wasser-Gas-Shiftreaktion in das gewünschte Synthesegasendprodukt umgewandelt wird.

Eine Ausgestaltung des erfindungsgemäßen Verfahrens sieht vor, dass aus dem C-Einsatz und dem Wasserdampfeinsatz mehrere weitgehend homogene Gasgemischströme erzeugt werden, die bevorzugt alle dieselbe chemische Zusammensetzung und Größe aufweisen. Der Wasserdampfeinsatz kann vor oder nach der Aufteilung in mehrere Gasströme zugespeist werden. Zweckmäßigerweise werden die weitgehend homogenen Gasgemischströme in mehreren parallel betriebenen Dampfreformern weiter behandelt, wobei die Anzahl der Dampfreformer der Anzahl der weitgehend homogenen Gasgemischströme entspricht, sodass jeder der weitgehend homogenen Gasgemischströme einem eigenen Dampfreformer zugeführt und dort in einen Teilstrom des Synthesegasendproduktes umgewandelt wird.

Eine Variante des erfindungsgemäßen Verfahrens sieht vor, dass die gesamte für die Erzeugung des Synthesegasendproduktes benötigte Wassermenge in Form von Wasserdampfeinsatz oder/und flüssigem Wasser in den heißen C-Einsatz eingespeist wird.

Eine andere Variante des erfindungsgemäßen Verfahrens sieht vor, dass nur eine Teilmenge der gesamten für die Erzeugung des Synthesegasendproduktes benötigten Wassermenge in den heißen C-Einsatz eingespeist wird. Die restliche Wassermenge wird in Form von überhitztem Dampf dem kohlenwasserstoffhaltigen Brennstoffeinsatz und/oder dem Oxidationsmittel vor der POX zugemischt und/oder sie wird als Spülgas für Anlagenteile (z. B. Brenner für die POX) verwendet und/oder im Bereich des Katalysators in den oder die Dampfreformer eingespeist.

Enthält der als Ausgangsstoff für die Synthesegasproduktion dienende kohlenwasserstoffhaltige Einsatz höhere Kohlenwasserstoffe als Methan, so sieht eine weitere Variante des erfindungsgemäßen Verfahrens vor, dass der Ausgangstoff durch eine Vor-Reformierung in einen im wesentlichen Methan enthaltenden kohlenwasserstoffhaltigen Brennstoffeinsatz für die POX umgewandelt wird. Die Energie zur Durchführung der Vor-Reformierung wird dem heißem Synthesegasprodukt entzogen oder über Brenner in den Prozess eingebracht.

Eine zweckmäßige Ausgestaltung des erfindungsgemäßen Verfahrens sieht vor, dass die Wärme des heißen Synthesegasproduktes zur Vorwärmung der Einsatzstoffe oder zur Beheizung von Reaktoren, wie z. B. eines Gas-Heated-Reformers, genutzt wird.

Die Erfindung betrifft ferner eine Vorrichtung zur Herstellung eines Synthesegasproduktes durch katalytische Dampfreformierung eines vorwiegend aus Wasserstoff (H₂) und Kohlenmonoxid (CO) bestehenden, Kohlenwasserstoffe enthaltenden Einsatzes (C-Einsatz).

Vorrichtungsseitig wird die gestellte Aufgabe dadurch gelöst, dass eine Einrichtung zur Einspeisung eines überhitzten Wasserdampf enthaltenden Einsatzes (Wasserdampfeinsatz) in den C-Einsatz und ein als Dampfreformer ausgeführter Reaktor, in dem der C-Einsatz mit katalytischer Unterstützung in das Synthesegasprodukt umsetzbar ist, hintereinander angeordnet sind, wobei die Einrichtung zur Einspeisung des Wasserdampfeinsatzes so ausgestaltet ist, dass aus dem Wasserdampfeinsatz und dem C-Einsatz ein weitgehend homogenes Gasgemisch erzeugbar und in den Dampfreformer einleitbar ist.

Der Dampfreformer ist im Wesentlichen als stehender Zylinder ausgeführt, und enthält in seinem Innern bevorzugt ein Schüttbett aus einem geeigneten Katalysatormaterial. Das Schüttbett ist so angeordnet, das es parallel zu Zylinderachse von dem weitgehend homogenen Gasgemisch durchströmbar ist. Der Raum oberhalb des Katalysatorbetts ist zweckmäßig so geformt, dass das weitgehend homogene Gasgemisch gleichmäßig über den gesamten Einströmquerschnitt des Schüttbetts verteilbar ist. Unterhalb des Schüttbetts, und von diesem durch eine geeignete gasdurchlässige Stützkonstruktion getrennt, befindet sich ein Sammelraum, über den das Synthesegasgasprodukt abziehbar ist.

Eine andere Ausgestaltung der erfindungsgemäßen Vorrichtung sieht vor, den Dampfreformer als liegenden Zylinder auszuführen, wobei das im Innern des Zylinders angeordnete Schüttbett aus geeignetem Katalysatormaterial von dem weitgehend homogenen Gasgemisch quer zur Zylinderachse durchströmbar ist. Diese Ausführung erlaubt es, den Einströmquerschnitt des Schüttbetts größer zu gestalten, als dies in einem stehenden Zylinder möglich ist. Dadurch sind kleinere Anströmgeschwindigkeiten und geringere Druckverluste erreichbar. Der Raum oberhalb des Schüttbetts ist zweckmäßig so gestaltet, dass das einströmende weitgehend homogene Gasgemisch gleichmäßig über den gesamten Einströmquerschnitt des Schüttbetts verteilbar ist.

Weitere Varianten der erfindungsgemäßen Vorrichtung sehen vor, dass der Dampfreformer das katalytisch wirkende Material in Form einer monolithischen Packung oder als strukturierte Packung oder als Wirbelschicht oder/und in Form einer Beschichtung der Wand der Reaktionskammer enthält.

Die Erfindung weiterbildend wird vorgeschlagen, einen Reaktor zur Erzeugung eines vorwiegend aus Wasserstoff (H₂), Kohlenmonoxid (CO) bestehenden Synthesegases, der bevorzugt als ein Reaktor zur Durchführung einer partiellen Oxidation ausgeführt ist (POX-Reaktor), mit dem Dampfreformer zu verbinden, wobei die Einrichtung zur Einspeisung des Wasserdampfeinsatzes zwischen diesem Reaktor und dem Dampfreformer angeordnet ist, und das Synthesegas als C-Einsatz in den Dampfreformer einleitbar ist.

Der POX-Reaktor ist zweckmäßig mit einem Brenner ausgestattet, der mit vorgewärmten Einsatzstoffen beschickbar ist. Er weist eine Brennkammer auf, die bei den verfahrentechnisch bedingt hohen Temperaturen beständig ist, und deren Geometrie so beschaffen ist, dass die partielle Oxidation des Brennstoffeinsatzes mit minimaler Rußbildung und hoher Umsatzleistung durchführbar ist. Vorzugsweise wird die Brennkammer zylindrisch und mit einem Länge/Durchmesser-Verhältnis ausgeführt, das zwischen 3/2 und 30/1, bevorzugt zwischen 10/4 und 10/1 und besonders bevorzugt zwischen 10/2 und 10/1 liegt. Die Brennkammer besitzt zumindest eine Öffnung, durch die das heiße Synthesegas abziehbar und über eine geeignete Leitung zum Dampfreformer überführbar ist. Erfindungsgemäß ist der POX-Reaktor so ausgeführt, dass seine Längsachse waagrecht oder senkrecht verläuft.

Eine weitere Ausgestaltung der erfindungsgemäßen Vorrichtung sieht mehrere parallel angeordnete Dampfreformer vor, denen das weitgehend homogene Gasgemisch in parallelen Teilströmen zuführbar ist. In jedem der parallel angeordneten Dampfreformer ist bevorzugt jeweils einer der Teilströme durch Dampfreformierung in einen Teilstrom des Synthesegasproduktes umsetzbar. Jeder der parallel angeordneten Dampfreformer weist zweckmäßig die gleiche Bauform und Baugröße auf, wobei die Bauform den oben gemachten Beschreibungen entspricht.

Die Erfindung weiterbildend wird vorgeschlagen, geeignete Einrichtungen zur Durchführung einer Zuspeisung von Wasserdampfeinsatz und einer Dampfreformierung gemeinsam mit einer Einrichtung zur Durchführung einer partiellen Oxidation in einem einzigen Reaktor so anzuordnen, dass partielle Oxidation, Zuspeisung von Wasserdampfeinsatz und Dampfreformierung nacheinander durchführbar sind.

Enthält der als Ausgangsstoff für die Synthesegasproduktion dienende kohlenwasserstoffhaltige Einsatz höhere Kohlenwasserstoffe als Methan, so sieht eine weitere Variante der erfindungsgemäßen Vorrichtung einen Reaktor vor, in dem durch Reformierung aus dem Ausgangsstoff ein im Wesentlichen aus Methan bestehender Brennstoffeinsatz für die POX erzeugt wird.

Die Erfindung ermöglicht es, aufgrund der weitgehend homogenen Temperaturverteilung in dem in einen Dampfreformer eintretenden Gasstrom, das Katalysatormaterial bei vergleichbarer Umsatzleistung weit weniger stark zu belasten und effektiver auszunutzen, als beispielsweise in einem konventionellen ATR-Reaktor.

In der Variante mit mehreren parallel betriebenen Dampfreformern bietet die Erfindung die Möglichkeit, einen der Dampfreformer abzuschalten (beispielsweise um den Katalysator auszutauschen), ohne die Synthesegaserzeugung unterbrechen zu müssen, da die Aufgabe des abgeschalteten Dampfreformers von den übrigen Dampfreformern zumindest teilweise übernommen werden kann. Die Durchführung von Versuchen (z. B. Tests zu Optimierung des Katalysatormaterials) unter Betriebsbedingungen ist bei dieser Variante der erfindungsgemäßen Vorrichtung sehr leicht möglich, da ein Testbehälter an Stelle eines der Dampfreformer an die Anlage anschließbar ist.

Wegen der räumlichen Trennung der drei Einrichtungen zur Durchführung der Verfahrensschritte partielle Oxidation, Zuspeisung des Wasserdampfeinsatzes und Dampfreformierung, erlaubt es die Erfindung, diese Einrichtungen weitgehend unabhängig voneinander für ihren jeweiligen Einsatzzweck zu optimieren. Für den POX-Reaktor bedeutet das, dass seine Brennkammer für eine Gasphasenreaktion optimiert ist, d. h. ein großes Länge/Durchmesser-Verhältnis aufweist, durch das die Ausbildung von Rückströmzonen weitgehend verhindert wird. Da Wasserdampf nicht oder nur zu einem kleinen Teil durch die Brennkammer geführt wird und die Kinetik für die partielle Oxidation einige Größenordnungen schneller abläuft als die Reformierungsreaktion, können mit lediglich einem einzigen POX-Reaktor Synthesegasmengen von mehreren Millionen m_{N}³/h erzeugt werden. Durch die geringere Dampfmenge können bei gleiche hoher O₂-Dosierung und gleich hoher Vorwärmung der Einsatzstoffe bei der partiellen Oxidation höhere Reaktionstemperaturen erreicht werden, als bei dem ATR. Die mittlere Temperatur kann dabei mehr als 1600°C erreichen, was sich positiv auf die Rußvermeidung auswirkt.

Wird mit dem kohlenwasserstoffhaltigen Einsatz für den POX-Reaktor gleichzeitig auch Wasserdampf eingebracht, so ist die mögliche Wasserdampfvorwärmung auf ca. 650°C beschränkt, da bei höheren Temperaturen ein Zerfall der Kohlenwasserstoffe und damit die Rußbildung einsetzen. Die erfindungsgemäße Zuspeisung des Wasserdampfeinsatzes in den heißen C-Einsatz erlaubt dagegen eine Wasserdampfvorwärmung auf weit höhere Temperaturen.

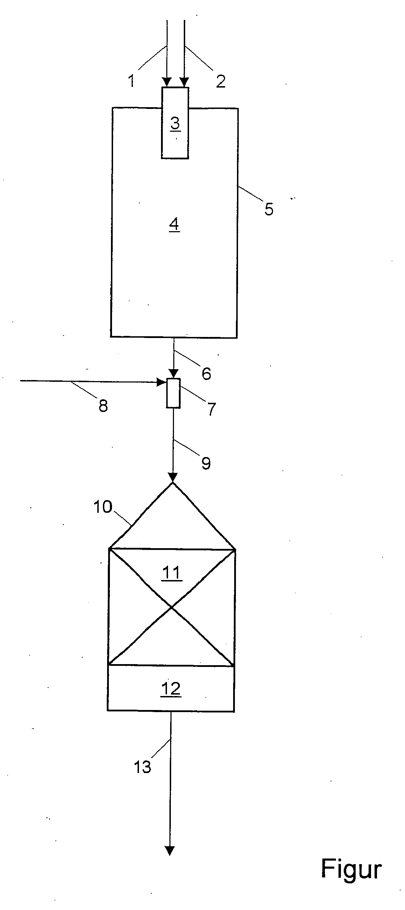

Im Folgenden soll die Erfindung anhand eines in der Figur schematisch dargestellten Ausführungsbeispiels näher erläutert werden:
Das vorliegende Ausführungsbeispiel betrifft eine Anlage zur Erzeugung eines Synthesegasproduktes, wobei Methan als kohlenwasserstoffhaltiger Ausgangsstoff dient. Als Oxidationsmittel wird Sauerstoff und als Wasserdampfeinsatz überhitzter Wasserdampf eingesetzt.

Über die Leitungen 1 und 2 werden Methan bzw. Sauerstoff dem Brenner 3 in einem unterstöchiometrischen Verhältnis zugeführt. Das Methan 1 wird in einem nicht dargestellten Wärmetauscher auf 650°C aufgeheizt, während der Sauerstoff 2, in einem ebenfalls nicht dargestellten Wärmetauscher angewärmt, mit 200°C in den Brenner 3 einströmt. Über den Brenner 3 werden Methan 1 und Sauerstoff 2 vermischt und in die heiße Brennkammer 4 des Reaktors 5 eingeleitet, wo es aufgrund des unterstöchiometrischen Methan/Sauerstoff-Verhältnisses zu einer partiellen Oxidation des Methans kommt, die verbunden ist mit einer starken Wärmefreisetzung.

Das heiße Gas aus dem Reaktor 5 wird über die Leitung 6 zur Mischeinrichtung 7 weitergeführt, wo durch Zuspeisung von überhitztem Wasserdampf 8 ein weitgehend homogenes Gasgemisch erzeugt wird. Dieses Gasgemisch wird über Leitung 9 weitergeführt zum Dampfreformer 10.

Im Dampfreformer 10 wird der eintretende Gasstrom so weitergeführt, dass er gleichmäßig über den gesamten Einströmquerschnitt des Katalysatorbettes 11 verteilt wird. Im Katalysatorbett 11 wird aus dem Gasstrom durch Dampfreformierung und Wasser-Gas-Shiftreaktion ein Synthesegasprodukt erzeugt, das im Sammelraum 12 gesammelt, anschließend über Leitung 13 aus dem Dampfreformer 10 abgezogen und einer weiteren Behandlung zugeführt wird.

## Patentansprüche

1. Verfahren zur Herstellung eines Synthesegasproduktes durch katalytische Dampfreformierung eines vorwiegend aus Wasserstoff (H₂) und Kohlenmonoxid (CO) bestehenden, Kohlenwasserstoffe enthaltenden Einsatzes (C-Einsatz), **dadurch gekennzeichnet, dass** aus dem C-Einsatz durch Zuspeisung eines überhitzten Wasserdampf enthaltenden Einsatzes (Wasserdampfeinsatz) ein weitgehend homogenes Gasgemisch gebildet wird, welches anschließend durch katalytisch unterstützte Dampfreformierung in das Synthesegasprodukt umgesetzt wird, wobei die für die katalytisch unterstützte Dampfreformierung benötigte Energie vollständig dem weitgehend homogenen Gasgemisch entzogen wird.

2. Verfahren nach Anspruch 1, **dadurch gekennzeichnet, dass** es sich bei dem Wasserdampfeinsatz um überhitzten Wasserdampf handelt.

3. Verfahren nach Anspruch 1, **dadurch gekennzeichnet, dass** es sich bei dem Wasserdampfeinsatz um ein Gemisch aus überhitztem Wasserdampf und H₂ oder/und CO oder/und CO₂ oder/und Kohlenwasserstoffen handelt.

4. Verfahren nach einem der Ansprüche 1 bis 3, **dadurch gekennzeichnet, dass** der C-Einsatz vor der Zuspeisung des Wasserdampfeinsatzes eine Temperatur besitzt, die zwischen 800 und 2500°C liegt.

5. Verfahren nach einem der Ansprüche 1 bis 3, **dadurch gekennzeichnet, dass** der C-Einsatz vor der Zuspeisung des Wasserdampfeinsatzes eine Temperatur besitzt, die zwischen 950 und 2000°C liegt.

6. Verfahren nach einem der Ansprüche 1 bis 3, **dadurch gekennzeichnet, dass** der C-Einsatz vor der Zuspeisung des Wasserdampfeinsatzes eine Temperatur besitzt, die zwischen 1050 und 1600°C liegt.

7. Verfahren nach einem der Ansprüche 1 bis 6, **dadurch gekennzeichnet, dass** die gesamte für den Prozess benötigte Wassermenge in Form von Wasserdampfeinsatz und/oder flüssigem Wasser dem C-Einsatz zugespeist wird.

8. Verfahren nach einem der Ansprüche 1 bis 7, **dadurch gekennzeichnet, dass** der C-Einsatz durch partielle Oxidation eines vorwiegend aus Methan bestehenden Brennstoffeinsatzes erzeugt wird, wobei als Oxidationsmittel Luft oder mit Sauerstoff angereicherte Luft oder reiner Sauerstoff eingesetzt wird.

9. Verfahren nach einem der Ansprüche 1 bis 8, **dadurch gekennzeichnet, dass** ein Teil der für den Prozess benötigten Wassermenge in Form von überhitztem Dampf dem Brennstoffeinsatz und/oder dem Oxidationsmittel zugemischt und/oder als Spülgas für Anlagenteile verwendet wird.

10. Verfahren nach einem der Ansprüche 1 bis 9, **dadurch gekennzeichnet, dass** ein Teil der für den Prozess benötigten Wassermenge in Form von Wasserdampfeinsatz im Bereich des zur Dampfreformierung verwendeten Katalysatormaterials in den heißen Gasstrom eingespeist wird.

11. Verfahren nach einem der Ansprüche 1 bis 10, **dadurch gekennzeichnet, dass** das weitgehend homogene Gasgemisch aus C-Einsatz und Wasserdampfeinsatz in mehrere, bevorzugt gleich große Teilströme aufgeteilt wird, und jeder der Teilströme unabhängig von den übrigen Teilströmen einer Dampfreformierung unterzogen wird.

12. Verfahren nach einem der Ansprüche 1 bis 11, **dadurch gekennzeichnet, dass** der vorwiegend aus Methan bestehende Brennstoffeinsatz für die partielle Oxidation durch katalytische Umsetzung höherer Kohlenwasserstoffe erzeugt wird.

13. Vorrichtung zur Herstellung eines Synthesegasproduktes durch katalytische Dampfreformierung eines vorwiegend aus Wasserstoff (H₂) und Kohlenmonoxid (CO) bestehenden, Kohlenwasserstoffe enthaltenden Einsatzes (C-Einsatz), **dadurch gekennzeichnet, dass** eine Einrichtung zur Einspeisung eines überhitzten Wasserdampf enthaltenden Einsatzes (Wasserdampfeinsatz) in den C-Einsatz und ein als Dampfreformer ausgeführter Reaktor, in dem der C-Einsatz mit katalytischer Unterstützung in das Synthesegasprodukt umsetzbar ist, hintereinander angeordnet sind, wobei die Einrichtung zur Einspeisung des Wasserdampfeinsatzes so ausgestaltet ist, dass aus dem Wasserdampfeinsatz und dem C-Einsatz ein weitgehend homogenes Gasgemisch erzeugbar und in den Dampfreformer einleitbar ist.

14. Vorrichtung nach Anspruch 13, **dadurch gekennzeichnet, dass** der Dampfreformer im Wesentlichen als stehender Zylinder ausgeführt ist, der parallel zur Zylinderachse durchströmbar ist.

15. Vorrichtung nach Anspruch 13, **dadurch gekennzeichnet, dass** der Dampfreformer im Wesentlichen als liegender Zylinder ausgeführt ist, der senkrecht zur Zylinderachse durchströmbar ist.

16. Vorrichtung nach einem der Ansprüche 13 bis 15, **dadurch gekennzeichnet, dass** mehrere Dampfreformer parallel angeordnet sind.

17. Vorrichtung nach einem der Ansprüche 13 bis 16, **dadurch gekennzeichnet, dass** das Katalysatormaterial in einem Dampfreformer als Schüttbett oder als Festbett oder als strukturierte Packung oder/und als Beschichtung der Innenwand des Reformers vorliegt.

18. Vorrichtung nach einem der Ansprüche 13 bis 17, **dadurch gekennzeichnet, dass** vor der Einrichtung zur Einspeisung des Wasserdampfeinsatzes in den C-Einsatz ein Reaktor angeordnet ist, in welchem aus einem kohlenwasserstoffhaltigen Brennstoffeinsatz durch partielle Oxidation (POX) der C-Einsatz gewonnen wird.

19. Vorrichtung nach Anspruch 18, **dadurch gekennzeichnet, dass** der Brennraum des POX-Reaktors ein Länge/Durchmesser-Verhältnis aufweist, das zwischen 3/2 und 30/1 liegt.

20. Vorrichtung nach Anspruch 18, **dadurch gekennzeichnet, dass** der Brennraum des POX-Reaktors ein Länge/Durchmesser-Verhältnis aufweist, das zwischen 10/4 und 10/1 liegt.

21. Vorrichtung nach Anspruch 18, **dadurch gekennzeichnet, dass** der Brennraum des POX-Reaktors ein Länge/Durchmesser-Verhältnis aufweist, das zwischen 10/2 und 10/1 liegt.

22. Vorrichtung nach einem der Ansprüche 18 bis 21, **dadurch gekennzeichnet, dass** vor dem POX-Reaktor ein Reaktor angeordnet ist, in dem durch katalytischen Umsetzung eines höhere Kohlenwasserstoffe enthaltenden Ausgangsstoffes ein vorwiegend Methan enthaltendes Gas erzeugbar ist, das als Brennstoffeinsatz dem POX-Reaktor zuführbar ist.
